# EUROPEAN PATENT APPLICATION

(11) **EP 0 721 181 A2**
(43) Date of publication of application: **10.07.1996**
(21) Application number: 96300075.7
(22) Date of filing: 04.01.1996
(51) Int. Cl.: G11B 5/48

(54) **Rotary-type information recording/reproducing apparatus**

(30) Priority: 09.01.1995 JP 1467/95
(71) Applicant: HITACHI, LTD., Chiyoda-ku, Tokyo 101 (JP)
(72) Inventor: Yoshida, Takeshi, Odawara-shi (JP); Mori, Kenji, Hadano-shi (JP); Yamaura, Satoru, Odawara-shi (JP); Koizumi, Yuuichi, Ashigarakami-gun, Kanagawa-ken (JP); Yoshida, Shinobu, Tsuchiura-shi (JP)
(74) Representative: Calderbank, Thomas Roger

(57) **Abstract**

In a rotary-type information recording/reproducing apparatus in which a pivot assembly (4) and a carriage (3) are incorporated between an upper yoke (8A) and a lower yoke (8B), and a magnet-yoke assembly (8), the pivot assembly (4) and the carriage (3) are assembled integrally with one another, the lower yoke (8B) is contacted with a plurality of mounts (12) provided on a base (5), and the magnet-yoke assembly is fixedly secured to the base in the vicinity of an extension line passing through a magnetic head and the pivot shaft. With this structure, the amount of thermal off-track is decreased and the main resonance peak gain in the head-positioning direction is reduced, so that the capacity of the rotary-type information recording/reproducing apparatus can be increased and the magnetic heads can be positioned with high speed and high accuracy.

## Description

The present invention relates to a rotary-type information recording/reproducing apparatus for rotating and positioning magnetic heads to predetermined positions on magnetic disks, and more particularly, to a rotary-type information recording/reproducing apparatus which can reduce the amount of thermal off-track caused by a change in temperature to increase the capacity of storing information and to reduce the period of time for switching the heads, and which can assist suppression of vibration in the head-positioning direction so that the heads can be positioned with high speed and high accuracy.

Generally, in a magnetic disk apparatus in which a plurality of magnetic disks are stacked, magnetic heads are moved to and positioned at predetermined track regions of the magnetic disks while they are being floated, under such a condition that the magnetic disks are driven to rotate at a certain speed by a disk rotary drive motor secured to a base, thereby recording data in the magnetic disks or reproducing data from them. The positioning of the magnetic heads at the certain track regions is performed by a rotary-type actuator which pivotally moves the magnetic heads in a radial direction of the magnetic disk for positioning the heads in place. The actuator comprises a carriage which elastically supports the magnetic heads at its one end via head suspensions, a pivot assembly which rotatably supports the carriage, and a voice coil motor which pivotally drives the carriage by a magnetic interaction between a driving coil, yokes and magnets.

This voice coil motor comprises the driving coil, the permanent magnets and yokes which constitute a magnetic circuit. The driving coil is connected to the other end of the carriage, and the remaining permanent magnets and yokes (all of which will be referred to as "a magnet-yoke assembly") are secured onto the base. Since the driving coil interposed in the magnetic circuit is affected by the magnetic field, the carriage including the driving coil attached to its one end is rotated about the pivot shaft when electric current is applied to the driving coil.

A technique relating to the magnetic disk apparatus according to the above prior art has been disclosed in, for example, JP-A-6-96532 and JP-A-4-302873.

In such magnetic disk apparatus, because the carriage pivot shaft and the magnet-yoke assembly are unified and secured to the base, various problems occur as follows.

The base is generally made of an aluminum alloy, and the yokes are generally made of an iron alloy. In this connection, in the case where the base and the magnet-yoke assembly are tightly connected to each other, thermal displacement occurs due to a difference between coefficients of thermal expansion of the base and the magnet-yoke assembly when the temperature changes owing to the heat generated by the driving coil. A phenomenon of off-track due to such thermal deformation is generally called "thermal off-track".

More specifically, in a magnetic disk apparatus in which a dedicated servo method utilizes a servo disk on which only servo data is recorded, the off-track between the servo disk and data disks due to relative displacement between data heads and a servo head impedes an increase of the track recording density, so that increasing the data capacity is difficult. In a magnetic disk apparatus employing an embedded servo (sector servo) method, servo data is embedded in a sector which is a part of the data disk for recording data. Therefore, when off-set between magnetic heads occur due to thermal deformation, adjusting the head positions is necessary when switching the heads, so that it takes an unfavorably long time to position the heads.

Further, in addition to the problem resulting from the heat, when the carriage is driven by the above-described voice coil motor, a reaction force acts on the magnet-yoke assembly so as to cause structural vibration. Because the carriage pivot shaft is integrally connected to the magnet-yoke assembly, the vibration of the magnet-yoke assembly adversely affects the carriage, so that there may occur an error in positioning the magnetic heads (off-track of the magnetic heads).

A measure for solving the problem of the thermal off-track has been disclosed in, for example, JP-A-3-207059. According to this measure, the magnet-yoke assembly is semifixedly connected to the base by means of a spring and a screw fastener so that the yoke can slide along the surface of the base if the yoke and the base contact each other at an appropriate contact pressure. This occurs even when the yoke and the base are thermally deformed at different rates due to a change in temperature, thereby reducing the off-track caused by the thermal deformation of the carriage pivot shaft. The measure of the magnetic disk apparatus according to the above-described prior art is theoretically possible. However, controlling the contact force between the base and the yoke is difficult. Further, since the magnet-yoke assembly is not fixed to the base completely, when thermal expansion and thermal contraction due to the temperature change are repeated, the position of the magnet-yoke assembly may be deviated from the reference position with respect to the base so as to change driving characteristics of the carriage. When a dynamic external force larger than the reaction force of the spring used for securing the magnet-yoke assembly acts on the magnet-yoke assembly, the assembly may separate from the base so as to damage the mechanism within the apparatus. Accordingly, the magnet-yoke assembly should be fixed to the base.

One preferred aim of the present invention is to provide a rotary-type information recording/reproducing apparatus which may reduce the amount of thermal off-track caused by a change in temperature and which may assist suppression of vibration in head-positioning.

Another preferred aim of the invention is to provide a rotary-type information recording/reproducing apparatus which may reduce the amount of thermal off-track caused by a change in temperature so as to increase the capacity of storing information and to reduce the period of time for switching the heads, and which may assist suppression of vibration in head-positioning so as to position the heads with high speed and high accuracy.

A rotary-type magnetic recording/reproducing apparatus according to the invention includes data recording magnetic disks rotatably supported on a base, and a rotary-type actuator for positioning magnetic heads in a radial direction of the magnetic disk, the magnetic heads recording data on the magnetic disks or reproducing data from them. In the magnetic recording/reproducing apparatus, the rotary-type actuator includes a carriage which supports the magnetic heads at one end thereof and retains a driving coil at the other end thereof, a pivot assembly for rotatably supporting the carriage, and a driving coil attached on the carriage and a magnet-yoke assembly for generating a torque to rotate the carriage about the pivot assembly, the pivot assembly and the carriage are incorporated between yokes of the magnet-yoke assembly, and the magnet-yoke assembly integrally assembled with the pivot assembly and the carriage is fixedly secured to the base only in the vicinity of an extension line passing through the magnetic head and the pivot shaft.

In the rotary-type information recording/reproducing apparatus according to the invention, because the magnet-yoke assembly is fixedly secured to the base only in the vicinity of the extension line passing through the magnetic head and the pivot shaft, even when the magnet-yoke assembly and the base are thermally expanded by different amounts due to heat, both ends in the lengthwise direction of the lower yoke can be freely displaced without being influenced by the thermal displacement of the base. As a result, a relative displacement between the magnetic heads and the pivot assembly does not occur so that the amount of thermal off-track can be minimized. That is, the invention is arranged such that the position of a pivot shaft (a rotary axis of the carriage) serving as a reference position in positioning the heads is not displaced with respect to the base even if the magnet-yoke assembly is thermally displaced with respect to the base. Therefore, the influence of the thermal off-track can be decreased. If thermal displacement of the pivot shaft occurs in a track tangential direction (along the extension line passing through the magnetic head and the pivot shaft) perpendicular to the head-positioning direction, this displacement is not so serious as compared with the displacement in the head-positioning direction. Further, between two separated fixing mounts situated across from each other at the middle of the lower yoke, there occurs an error of expansion due to the difference of coefficients of thermal expansion between the base and the lower yoke. However, for the reasons that a distance between the fixing mounts is very short and that the thermal displacement occurs in the track tangential direction, the error of thermal expansion between the base and the lower yoke hardly causes such thermal off-track as to adversely affect the data recording/reproducing performance of the apparatus.

In the drawings
Fig. 1 is a schematic view showing the overall structure of a rotary-type information recording/reproducing apparatus according to the present invention;
Fig. 2 is an exploded view of a pivot assembly, a carriage and a magnet-yoke assembly of Fig. 1, showing a manner of assembling them;
Fig. 3 is a cross-sectional view of the magnet-yoke assembly of Fig. 1, showing the principle of occurrence of driving force;
Fig. 4 is a cross-sectional view showing a state in which the magnet-yoke assembly of Fig. 1 is fixed to a base;
Fig. 5 is a plan view showing a fixture structure of the magnet-yoke assembly according to the first embodiment of the invention;
Fig. 6 is a plan view showing a fixture structure of the magnet-yoke assembly according to the second embodiment of the invention;
Fig. 7 is a plan view showing a fixture structure of the magnet-yoke assembly according to the third embodiment of the invention;
Fig. 8 is a plan view showing a fixture structure of the magnet-yoke assembly according to the fourth embodiment of the invention;
Fig. 9 is a plan view showing a fixture structure of the magnet-yoke assembly according to the fifth embodiment of the invention;
Fig. 10 is a plan view showing a fixture structure of the magnet-yoke assembly according to the sixth embodiment of the invention;
Fig. 11 is a plan view showing a fixture structure of the magnet-yoke assembly according to the seventh embodiment of the invention;
Fig. 12 is a plan view showing a fixture structure of the magnet-yoke assembly according to the eighth embodiment of the invention;
Fig. 13 is a cross-sectional view for explanation of a fixture structure which attenuates vibration of the magnet-yoke assembly according to the ninth embodiment of the invention;
Fig. 14 is a cross-sectional view for explanation of a fixture structure which attenuates vibration of the magnet-yoke assembly according to the tenth embodiment of the invention;
Fig. 15 is a cross-sectional view for explanation of a fixture structure which attenuates vibration of the magnet-yoke assembly according to the eleventh embodiment of the invention;
Figs. 16A to 16D are views for explanation of an effect of reducing the amount of thermal off-track according to the invention;
Fig. 17 is a diagram for explanation of an effect of reducing the main resonance peak gain according to the invention; and
Figs. 18A to 18E are views indicating the effect of reducing the main resonance peak gain according to the invention.

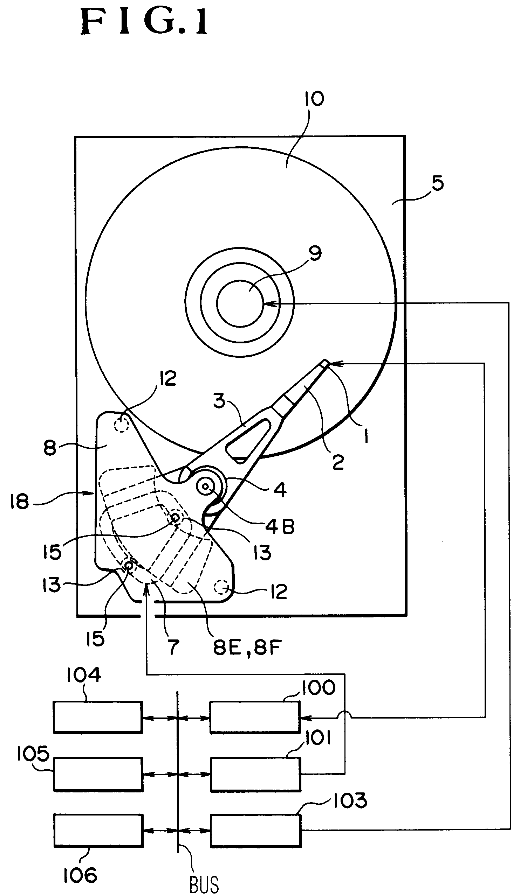

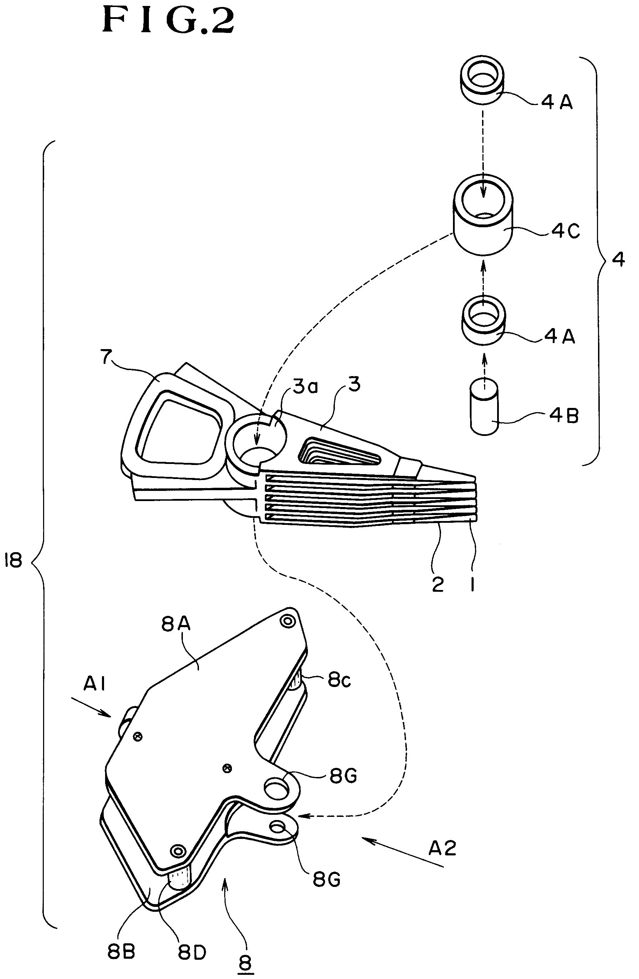

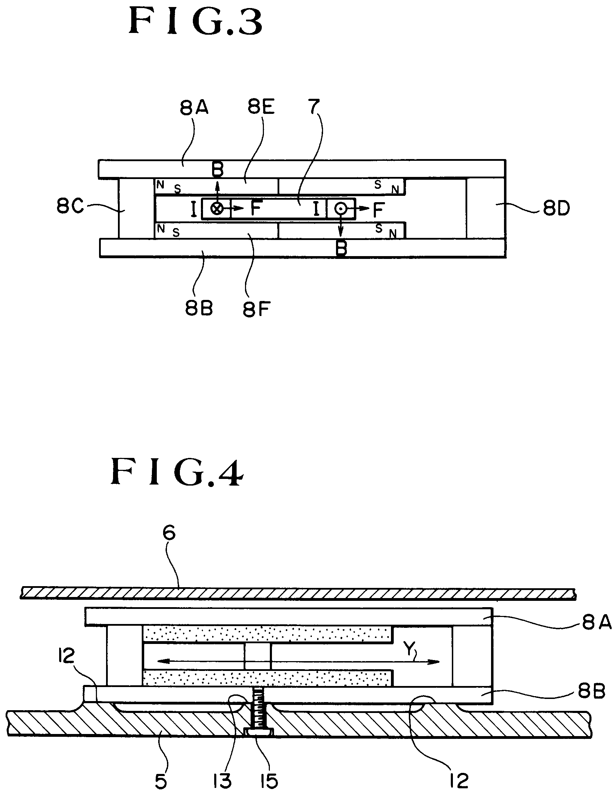

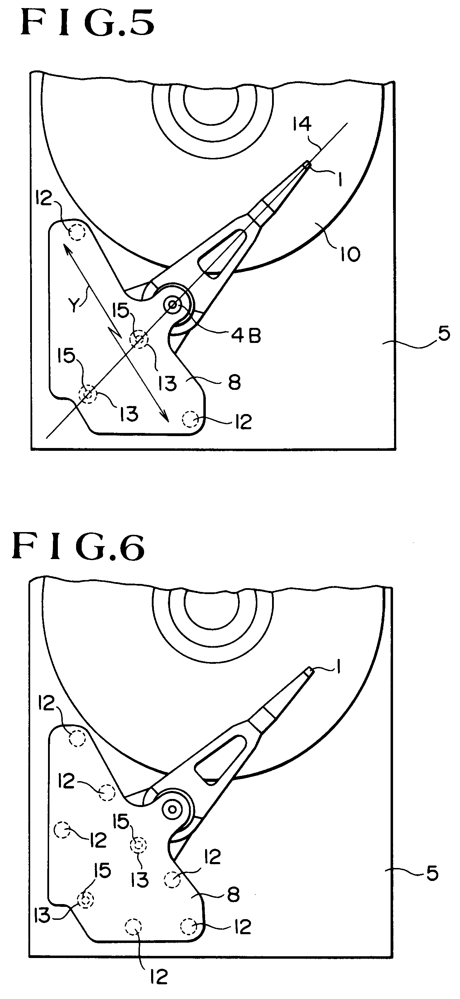

A rotary-type information recording/reproducing apparatus according to the present invention is described in detail with reference to the accompanying drawings. Fig. 1 is a schematic view showing the overall structure of the rotary-type information recording/reproducing apparatus according to the invention. Fig. 2 is an exploded view of a rotary-type actuator, showing a manner of assembling the actuator. Fig. 3 is a view for explanation of the structure and motion of a magnet-yoke assembly. Figs. 4 and 5 are views for explaining a state in which the magnet-yoke assembly is fixed to the base in accordance with the first embodiment of the invention.

Referring to Fig. 1, the rotary-type information recording/reproducing apparatus according to the invention comprises: a plurality of magnetic disks 10 stacked on a spindle 9 so as to be rotated; magnetic heads 1 for recording/reproducing data in/from the magnetic disks 10; a rotary-type actuator 18 which supports the magnetic heads 1 at its one end to position the heads; a base 5 which retains the spindle 9 and the rotary-type actuator 18 thereon; a disk drive circuit 103 which controls rotation of the spindle motor to rotate the magnetic disks 10; a voice coil drive circuit 101 which drives the rotary-type actuator; a recording/reproduction control circuit 100 for recording/reproducing data through the magnetic heads 1; an interface 106 which exchanges the data with a host unit; and a micro-controller 104 which controls the above-described respective circuits by using control data stored in ROM 105.

The rotary-type actuator 18 includes head suspensions 2 which elastically retain the magnetic heads 1, a carriage 3 rotatable around a pivot assembly 4, the carriage 3 holding the head suspensions 2 at its one end, a driving coil 7 attached to the other end of the carriage 3, and the magnet-yoke assembly 8 with upper and lower yokes 8A and 8B between which the driving coil 7 is interposed. The base 5, as shown in Fig. 4, includes fixing mounts 13 projected therefrom for being fixedly secured to the magnet-yoke assembly 8 by means of screw fasteners 15, and contacting mounts 12 similarly projected from the base for frictionally contacting and supporting the magnet-yoke assembly 8.

As shown in Fig. 2 illustrative of the structure of the rotary-type actuator 18, the plurality of magnetic heads 1 are retained at distal ends of the plurality of head suspensions 2. The head suspensions 2 are secured to one end of the carriage 3. The pivot assembly 4 comprises two ball-bearings 4A, a carriage rotary shaft 4B and a sleeve 4C. The ball-bearings 4A are fitted between the pivot shaft 4B and the sleeve 4C in such a manner that the sleeve 4C can rotate with respect to the pivot shaft 4B. The thus-constructed pivot assembly 4 is fitted in a hole 3a of the carriage. The driving coil 7 is located opposite to the magnetic heads 1 relative to the hole 3a in which the pivot assembly 4 is fitted. The magnet-yoke assembly 8 comprises the upper yoke 8A, the lower yoke 8B and columns 8C and 8D. The upper and lower yokes 8A and 8B are connected to each other through the columns 8C and 8D. The upper yoke 8A is bent at a part thereof which is opposite to the magnetic heads 1, so as to abut against the lower yoke 8B, thereby ensuring sufficient strength. The driving coil 7 of the carriage 3 is interposed between the upper and lower yokes 8A and 8B. The rotary shaft 4B of the pivot assembly 4 is fitted in retaining holes 8G of the magnet-yoke assembly 8. The pivot assembly 4, the carriage 3 and the magnet-yoke assembly 8 are provisionally integrally assembled in the above-mentioned manner and mounted on and attached to the base 5.

In the thus-structured rotary-type actuator 18, as shown in Fig. 3, the drive coil 7 is exposed to the magnetic field in the direction along arrows B between the upper yoke 8A equipped with the permanent magnet 8E and the lower yoke 8B equipped with a permanent magnet 8F. In this state, by applying electric currents to the driving coil 7 supported at the other end of the carriage, driving force in the direction along arrows F is generated at two bundles of coil wires at the opposite sides of the driving coil 7, so as to rotate the carriage 3 about the pivot shaft 4B.

Meanwhile, the base 5 has two fixing mounts 13 on which the lower yoke 8B is mounted and secured thereto by means of the screw fasteners 15, and the two contacting mounts 12 for contacting with the lower yoke 8B, as shown in Figs. 1, 4 and 5. Fixing mounts and contacting mounts are located on the base in the in-plane direction relative to the base. The fixing mounts 13 are formed on the base on an extension line 14 which extends passing through the centers of the magnetic head 1 and the pivot assembly 4 when the magnetic head 1 is located near the central track region on the magnetic disk 10, as illustrated in Fig. 5. The mounts 13 are projected from the base toward the lower yoke 8B. Dividing the magnet-yoke assembly lengthwise with the extension line 14, the contacting mounts 12 are situated at each end of the yoke in approximately symmetrical position relative to the extension line 14, and the contacting mounts 12 project from the base toward the lower yoke 8B, as illustrated in Fig. 4. The lower yoke 8B is secured to the two fixing mounts 13 on the extension line 14. The lower yoke 8B frictionally contacts with (or is mounted on) the contacting mounts 12 at opposite ends thereof, the contacting mounts 12 being located at both ends of the lower yoke 8B in the lengthwise direction Y thereof.

As described above, the rotary-type information recording/reproducing apparatus according to the invention is arranged such that the magnet-yoke assembly of the rotary-type actuator is attached to the base by being fixed only to the two fixing mounts 13 on the extension line from the magnetic head and being frictionally contacted with the contacting mounts 12 at both the ends of the magnet-yoke assembly.

In the embodiment of the rotary-type information recording/reproducing apparatus according to the invention, the magnet-yoke assembly 8 is fixed only at the two positions on the extension line from the magnetic head, and the assembly 8 is mounted on and frictionally held by the contacting mounts 12 at its both ends. With such structure, even when the base and magnet-yoke assembly are thermally expanded, relative positional displacement between the magnetic disks and the pivot assembly supporting the magnetic heads can be suppressed to minimize the amount of thermal off-track.

The second embodiment of the attachment structure of mounts on the base and the magnet-yoke assembly used in the rotary-type information recording/reproducing apparatus according to the invention is described with reference to Fig. 6. The base 5 of the illustrated embodiment is provided with three contacting mounts 12 on each of opposite sides of the base, that is, six contacting mounts in total, facing to a lower surface of the lower yoke 8B, as shown in Fig. 6. The base is also provided with two fixing mounts 13 on the extension line from the magnetic head 1, similarly to the aforesaid embodiment. The lower yoke 8B is secured only to the fixing mounts 13 by screw fasteners 15.

According to this attachment structure of the magnet-yoke assembly 8, the frictional contact force between the base 5 and the lower yoke 8B is increased by providing the larger number of contacting mounts 12, thereby minimizing the thermal off-track. Also, the magnet-yoke assembly 8 is engaged with the base 5 more firmly, so that vibration can be prevented. Incidentally, because the sufficient frictional contact force is obtained due to the larger number of contacting mounts 12, the fixing mounts 13 may be omitted. Alternatively, the lower yoke 8B may only be pulled toward the base 5 by screw fasteners 15 without providing the fixing mounts therebetween. That is, the screw fasteners 15 may connect the lower yoke 8B and the base 5 to each other with a gap therebetween.

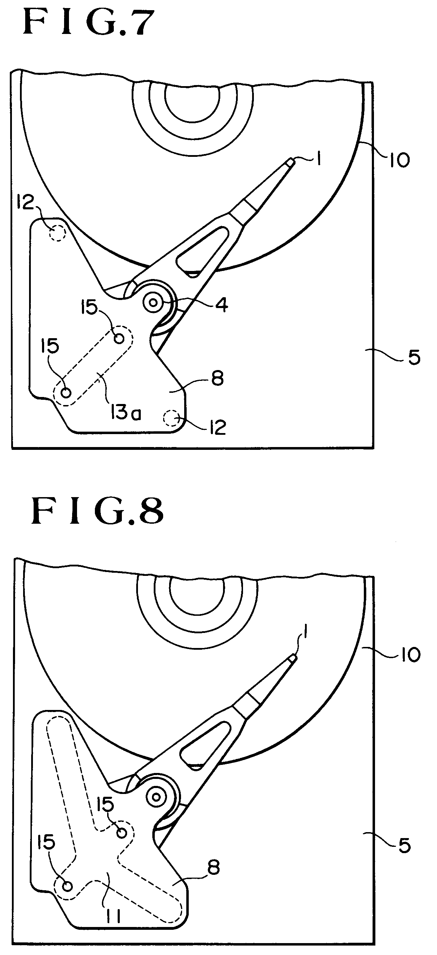

Fig. 7 shows the third embodiment of the attachment structure of the magnet-yoke assembly 8. A fixing mount 13A is so formed as to extend flat along the extension line passing through the magnetic head 1 and the pivot assembly 4. Contacting mounts 12 are provided at positions in the in-plane direction relative to the base. With such structure, in addition to the above-described effects, a contact area between the lower yoke 8B and the fixing mount 13A is increased so that the magnet-yoke assembly 8 can be retained on the base 5 more stably.

Fig. 8 illustrates the fourth embodiment of the attachment structure of the magnet-yoke assembly 8. A cross-shaped fixing and contacting mount 11 is provided on the base. The mount 11 is provided with an elongated portion along the extension line passing through the magnetic head 1 and the pivot assembly 4 and with side wings extending across the elongated portion in the in-plane direction relative to the base. Accordingly, in addition to the effects of the above-described embodiment, a contact area between the lower yoke 8B and the fixing and contacting mount 11 is further increased so that the magnet-yoke assembly 8 can be held on the base 5 more stably.

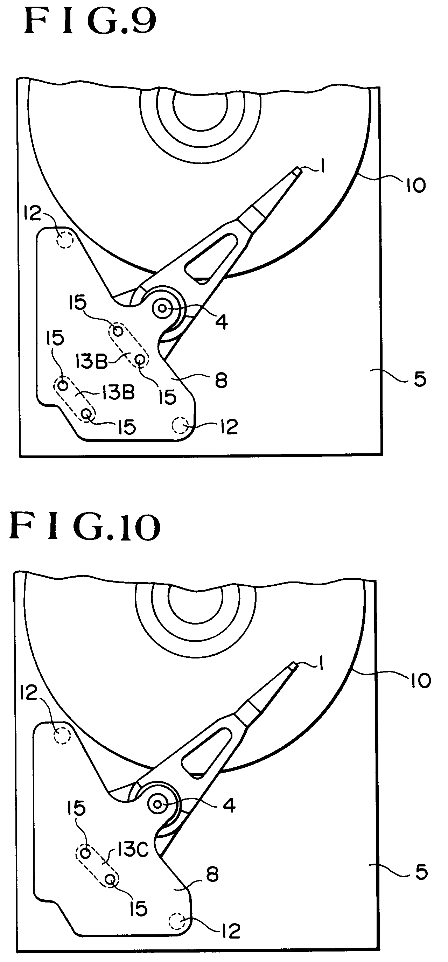

An apparatus according to the fifth embodiment shown in Fig. 9 is structured such that two fixing mounts 13B extending in the in-plane direction relative to the base are provided on the base, and the lower yoke 8B is secured to the fixing mounts 13B by two screw fasteners 15, respectively. An apparatus of the sixth embodiment shown in Fig. 10 is structured such that one fixing mount 13C extending in the in-plane direction relative to the base is provided on the base, and the lower yoke 8B is secured to the fixing mount 13C by two screw fasteners 15.

In the apparatus according to the fifth or sixth embodiment which employs the fixing mounts 13B or mount 13C extending in the in-plane direction relative to the base, the lower yoke 8B is secured to the end portions of the mounts 13B or mount 13C by means of the screw fasteners 15. The mounts 13B or mount 13C are located in such a manner that the central portions thereof generally exist on the extension line passing through the magnetic head 1 and the pivot assembly 4.

In the thus-constructed rotary-type information recording/reproducing apparatus, since the fixing mounts 13B or mount 13C, which extend in the in-plane direction relative to the base, are fixed to the lower yoke 8B at both ends thereof by means of the screw fasteners 15, the number of positions of fixture between the magnet-yoke assembly 8 and the base 5 is increased to thereby enhance the connecting strength therebetween. Also, because only the central portion of the magnet-yoke assembly 8 is fixed to the base 5 through the fixing mounts 13B or mount 13C and both end portions of the assembly 8 are frictionally held through the contacting mounts 12, even when the base 5 is thermally displaced, thermal off-track can be suppressed. In the apparatus according to these embodiments, the thermal expansion of the base 5 adversely affects on the accuracy in positioning the magnetic heads slightly larger than the apparatus of the first to fourth embodiments, because the lower yoke 8B is secured to the base at the two positions in the tangential direction of the magnetic disk. However, an interval between the screw fasteners is very small and the lower yoke and the base are fixedly connected to each other in the vicinity of the extension line passing through the magnetic head 1 and the pivot assembly 4, so that the affect by the thermal expansion can be minimized.

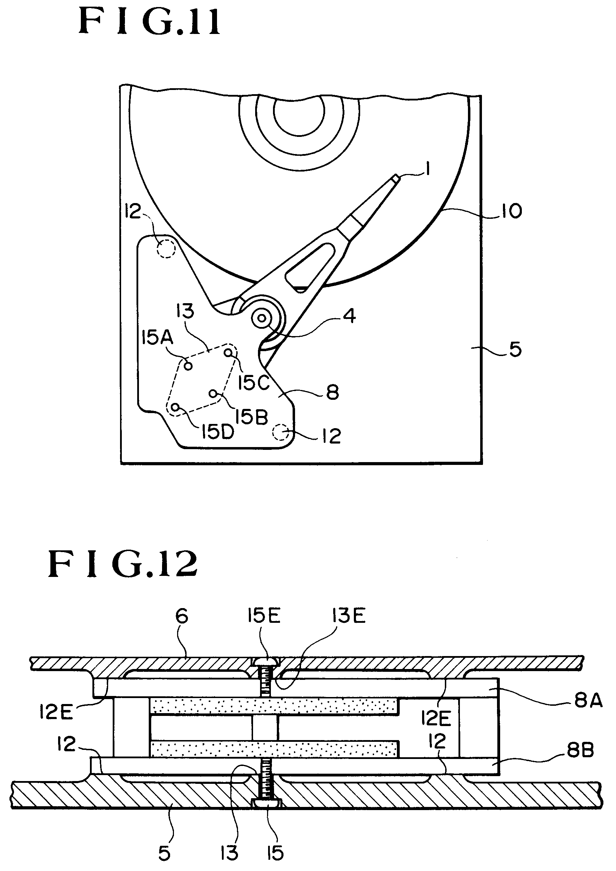

In an apparatus according to the seventh embodiment of the invention shown in Fig. 11, the base 5 is provided with a rhomboid fixing mount 13D projected therefrom in such a manner that both corners of the rhomboid mount on the longer diagonal line thereof are positioned on the extension line passing through the magnetic head 1 and the pivot assembly 4. The fixing mount 13D is fixed to the lower yoke at four positions near the corners of the rhomboid mount by means of four screw fasteners 15A to 15D. The base 5 is also provided with contacting mounts 12 at positions in the magnet-yoke assembly B in the in-plane direction relative to the base.

In the rotary-type information recording/reproducing apparatus of this embodiment, the lower yoke 8B is fixed to the base at the positions on the extension line passing through the magnetic head 1 and the pivot assembly 4 by means of the screw fasteners 15C and 15D and further at the positions which are symmetrical across the extension line by means of the screw fasteners 15A and 15B, so that the magnet-yoke assembly 8 is firmly secured to the base in the vicinity of the extension line. Also, the lower yoke 8B is frictionally held by the contacting mounts 12 at the positions in the magnet-yoke assembly 8 in the in-plane direction relative to the base. In this connection, even when the base 5 is thermally displaced, because the magnet-yoke assembly 8 is fixed to the base in the vicinity of the extension line (the central portion) through the fixing mount 13D, thermal off-track can be minimized. In addition, the screw fasteners 15A and 15B should be located close to the extension line, an interval therebetween is set to be small to minimize the thermal off-track, and an interval between the screw fasteners 15C and 15D is set to be large to fix the lower yoke 8B stably. The number of the screw fasteners is not limited to four.

Although the magnet-yoke assembly 8 is fixed to and held by the base 5 only from the lower side thereof in the embodiments which have been described above, the present invention is not restricted to these embodiments. The magnet-yoke assembly 8 may be fixed and held from the upper side thereof, which is described in detail hereinafter. This embodiment is described with reference to Fig. 12. Fig. 12 is a view for explanation a method of fixing the magnet-yoke assembly to the base according to the eighth embodiment, as viewed along the arrow A2 of Fig. 2 similarly to Fig. 4. The eighth embodiment is different from the embodiment shown in Fig. 4, in that a cover 6 is provided above the upper yoke 8A and the cover 6 includes fixing mounts and contacting mounts like the base 5. Assuming that the cover 6 is secured to the base 5 at its end portion through a structure which is not illustrated, the eighth embodiment is described below.

In a rotary-type information recording/reproducing apparatus according to the eighth embodiment, the base 5 is provided with fixing mounts 13 and contacting mounts 12 both of which are projected therefrom, and the cover 6 is also provided with fixing mounts 13E at positions corresponding to the fixing mounts 13 of the base 5 and contacting mounts 12E at positions corresponding to the contacting mounts 12 of the base 5. The fixing mounts 13 of the base 5 are secured to the lower yoke 8B by screw fasteners 15 and the fixing mounts 13E of the cover 6 are secured to the upper yoke 8A by screw fasteners 15E.

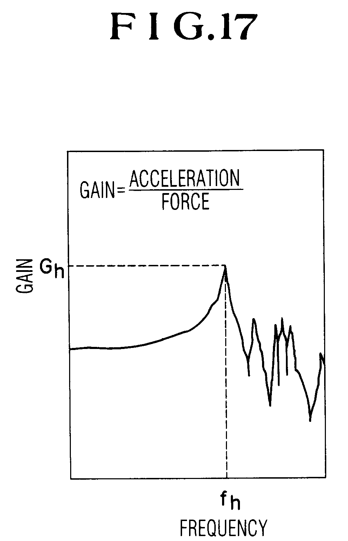

According to the apparatus of this embodiment, because the lower yoke 8B is fixed to the base and held in contact with the base, as described above, and the upper yoke 8A is also fixed to the cover 6 and held in contact with it, the main resonance frequency in the head-positioning direction can be increased and the main resonance peak gain can be reduced as compared with the apparatus in which only the lower yoke is fixed to the base and held in contact with it. More in detail, as a result of energizing the driving coil 7 by applying sinusoidal currents thereto, sweeping the frequency and obtaining frequency response (inertance characteristics) of acceleration in the head-positioning direction, as shown in Fig. 17, the main resonance frequency fₕ can be increased and the main resonance peak gain Gₕ can be reduced.

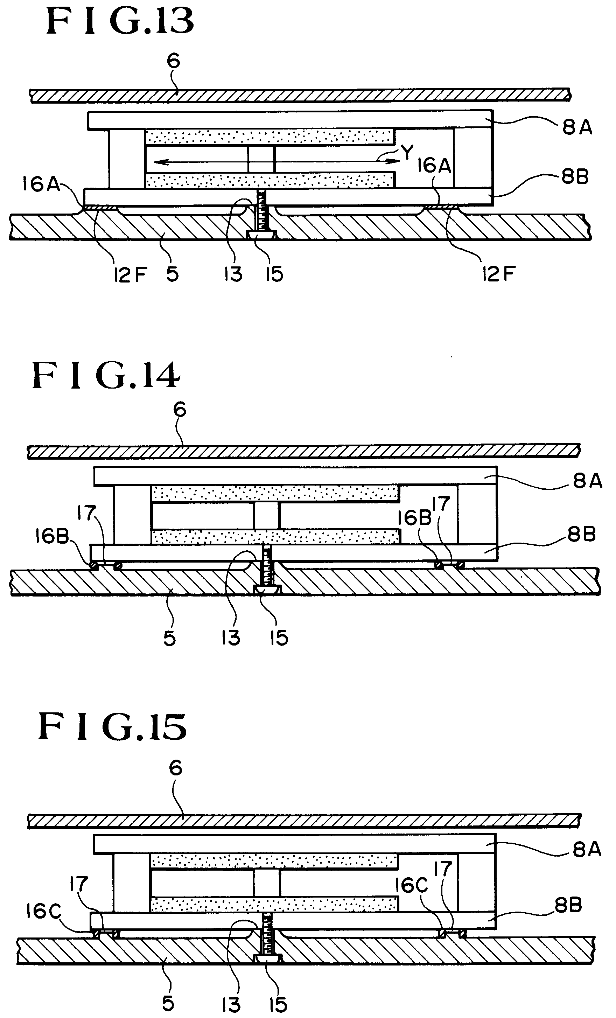

Fig. 13 is a view for explanation of the structure of the ninth embodiment which can reduce the main resonance peak gain in the magnet-yoke assembly in the head-positioning direction. In the ninth embodiment, the base 5 is provided with fixing mounts 13 similarly to the above-described embodiments, contacting mounts 12F of which heights are smaller than those of the fixing mounts 13, and plate-like viscous elastic members 16A between the mounts 12F and the lower yoke 8B of the magnet-yoke assembly 8. The viscous elastic members 16A restrain the magnet-yoke assembly 8 from vibrating when the carriage 3 is driven, thus decreasing the main resonance peak gain Gₕ in the head-positioning direction which is illustrated in Fig. 17.

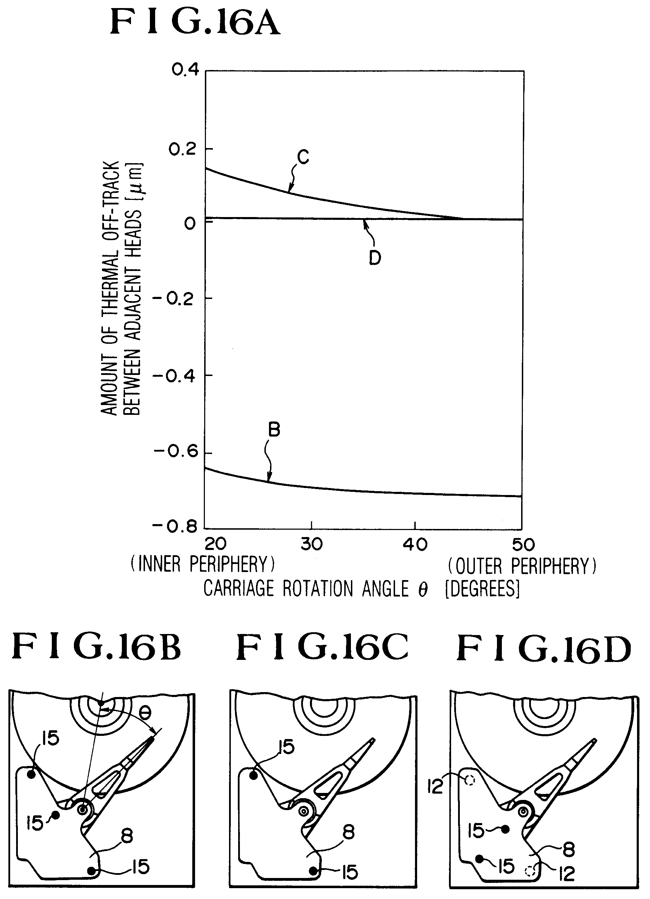

Fig. 14 is a view for explanation of the rotary-type information recording/reproducing apparatus including the structure of the tenth embodiment which can reduce the main resonance peak gain in the head-positioning direction. In this rotary-type information recording/reproducing apparatus, the base 5 is provided with fixing mounts 13 similarly to the above-described embodiments, contacting mounts 17 of which heights are smaller than those of the fixing mounts 13, and ring-like viscous elastic members 16B with circular cross-sections between the mounts 17 and the lower yoke 8B of the magnet-yoke assembly 8. The ring-like viscous elastic members 16B restrain the magnet-yoke assembly 8 from vibrating when the carriage 3 is driven, thus decreasing the main resonance peak gain Gₕ in the head-position direction as mentioned above.

Fig. 15 is a view for explanation of a rotary-type information recording/reproducing apparatus including the structure of the eleventh embodiment which can reduce the main resonance peak gain in the head-positioning direction. In this rotary-type information recording/reproducing apparatus, the base 5 is provided with fixing mounts 13 similarly to the above-described embodiments, contacting mounts 17 of which heights are smaller than those of the fixing mounts 13, and ring-like viscous elastic members 16C with rectangular cross-sections which are fitted between the mounts 17 and the lower yoke 8B of the magnet-yoke assembly 8. The ring-like viscous elastic members 16C restrain the magnet-yoke assembly 8 from vibrating when the carriage 3 is driven, thus decreasing the main resonance peak gain Gₕ in the head-positioning direction as mentioned above.

Although the viscous elastic members are provided on the contacting mounts of the base 5 in the above-described embodiments, the present invention is not limited to these embodiments, but it may be arranged such that, for example, the cover 6 is provided with fixing mounts and/or contacting mounts similarly to the embodiment of Fig. 12, and viscous elastic members are provided on the contacting mounts. Viscous elastic members made of spongy foamed fluoro rubber are preferred to prevent gas from being generated in the magnetic disk apparatus.

The number of the screw fasteners and the arrangement thereof are not restricted to those described in this specification. The present invention includes the technical concept that the lower yoke is secured to the base only in the vicinity of the extension line passing through the magnetic head at the central track region and the pivot assembly. Although the fixing mounts and contacting mounts are projected from the base and the cover toward the associated yokes in the aforesaid embodiments, the present invention is not limited to these embodiments. For example, the base and the cover may be made flat and the mounts may be provided on the yokes.

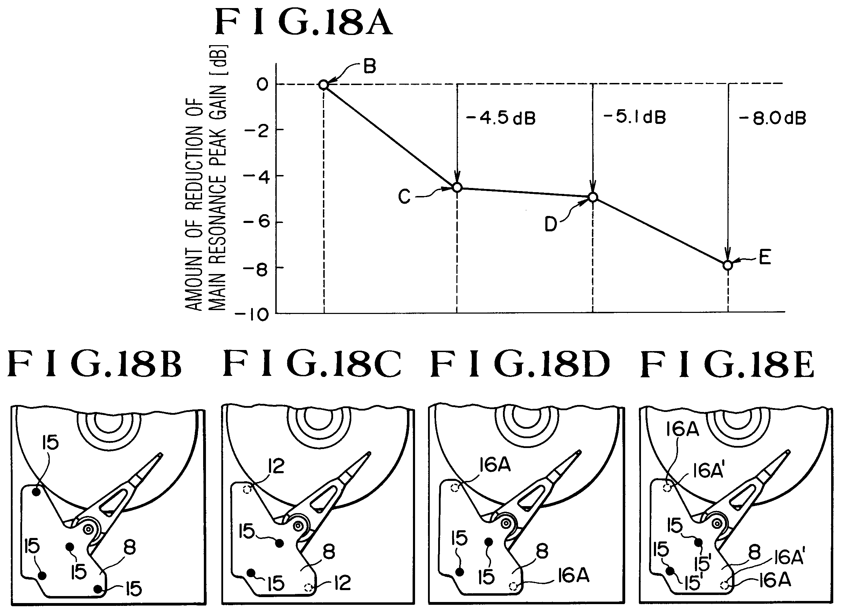

Effects of the invention are as follows: Fig. 16A is a diagram showing the relation between the amount of thermal off-track of adjacent heads and the carriage rotation angle θ. Figs. 16B, 16C and 16D are views for explanation of amounts of the thermal off-track. Figs. 18A, 18B, 18C, 18D and 18E are a diagram and views for explanation of amounts of reduction of the main resonance peak gain in the head-positioning direction.

In Fig. 16A, a comparative example 1 in which the magnet-yoke assembly 8 is fixed to the base 5 at both ends and the center, that is, three positions thereof as shown in Fig. 16B, is depicted by line B, a comparative example 2 in which the magnet-yoke assembly 8 is fixed to the base at both ends or two positions thereof as shown in Fig. 16C, is depicted by line C, and the first embodiment of the invention as shown in Fig. 16D, which has been previously described with reference to Figs. 1 to 4, is depicted by line D. Fig. 16A indicates amounts of thermal off-track (displacement) at carriage rotation angles θ when the magnetic heads pivotally moves between the inner and outer peripheral portions of the magnetic disks in the respective apparatus.

As clearly understood from these drawings, in the apparatus shown in Fig. 16B in which the magnet-yoke assembly is fixed to the base at the three positions, the thermal off-track occurs within a range from - 0.63 µm to - 0.71 µm when the magnetic heads move from the inner peripheries of the magnetic disks to the outer peripheries of the magnetic disks. In the apparatus shown in Fig. 16C in which the magnet-yoke assembly is fixed to the base at the two positions, the amount of thermal off-track is within a range from + 0.15 µm to + 0.01 µm when the magnetic heads move to the inner peripheries of the magnetic disks to the outer peripheries of the magnetic disks. Meanwhile, according to the apparatus of the invention shown in Fig. 16D, the amount of thermal off-track can be kept substantially uniformly within a range between + 0.013 µm and + 0.016 µm when the magnetic heads move from the inner peripheries of the disks to the outer peripheries of the disks. That is, according to the invention, the amount of thermal off-track can be decreased to about 1/9 of the amount of thermal off-track in case of the comparative examples.

Fig. 18A is a diagram showing for comparing the amounts [dB] of reduction of the main resonance peak gain Gₕ in the head-positioning direction. In Fig. 18A, point B depicts the apparatus of Fig. 18B as a comparative example in which the magnet-yoke assembly 8 is fixed to the base 5 at four positions thereof, point C depicts the apparatus of Fig. 18C of the invention in which the magnet-yoke assembly is fixed to the base at the two positions on the head extension line and held in contact with the base at the two positions, the apparatus having been previously described with reference to Figs. 1 to 4, point D depicts the apparatus of Fig. 18D according to the embodiment of the invention which has been previously described with reference to Fig. 13, and point E depicts the apparatus of Fig. 18E in which viscous elastic members 16A' and screw members 15' are also provided on the cover. Fig. 18A shows the amounts of reduction of the main resonance peak gain in the respective apparatus.

When the amount of reduction of the main resonance peak gain of the apparatus as the comparative example shown in Fig. 18B is determined as 0 [dB], the amount of reduction in the apparatus of Fig. 18C according to the invention is - 4.5 [dB], the amount of reduction in the apparatus of Fig. 18D according to the invention is - 5.1 [dB], and the amount of reduction in the apparatus of Fig. 18E in which the cover is also provided with the viscous elastic members is - 8.0 [dB].

Therefore, by means of the rotary-type information recording/reproducing apparatus according to the invention, the amount of thermal off-track can be largely reduced and the main resonance peak gain in the head-positioning direction can be remarkably decreased, as compared with the conventional apparatus.

## Claims

1. A rotary-type information recording/reproducing apparatus including data recording magnetic disks rotatably supported on a base, and a rotary-type actuator for moving magnetic heads in a radial direction of the magnetic disk to position the magnetic heads, said magnetic heads recording data in said magnetic disks or reproducing data from them, said rotary-type actuator comprising,
a carriage which supports the magnetic heads at one end thereof and retains a driving coil at the other end thereof,
a pivot assembly for rotatably supporting said carriage, and
a magnet-yoke assembly for generating torque in cooperation with said driving coil to rotate said carriage about said pivot assembly,
said magnet-yoke assembly including the permanent magnets, and upper and lower yokes between which said pivot assembly and carriage are incorporated,
said magnet-yoke assembly, said pivot assembly and said carriage being assembled integrally with one another, and said magnet-yoke assembly being fixedly secured to the base on and/or in the vicinity of an extension line passing through the magnetic head and the pivot assembly.

2. A rotary-type information recording/reproducing apparatus according to claim 1, wherein said base is provided with at least one first mount for fixing the magnet-yoke assembly thereto, said first mount being projected toward the magnet-yoke assembly, and said extension line passing through the magnetic head and the pivot assembly extends in a contour of an outer periphery of said first mount.

3. A rotary-type information recording/reproducing apparatus according to claim 2, wherein said base is provided with a plurality of second mounts at positions in a lengthwise direction of the lower yoke of the magnet-yoke assembly, said second mounts being projected toward the lower yoke so that they may frictionally contact with the lower yoke.

4. A rotary-type information recording/reproducing apparatus according to claim 3, wherein said magnet-yoke assembly is fixed to said first mount of the base by a screw fastener or fasteners.

5. A rotary-type information recording/reproducing apparatus according to claim 1, wherein said magnet-yoke assembly is provided with at least one first mount for being fixed to the base, said first mount being projected toward the base, and the extension line passing through the magnetic head and the pivot assembly extends in a contour of an outer periphery of said first mount.

6. A rotary-type information recording/reproducing apparatus according to claim 5, wherein said magnet-yoke is provided with a plurality of second mounts which are located in the lengthwise direction of the lower yoke of the magnet-yoke assembly, said second mounts being projected toward the base so that they frictionally contact with the base.

7. A rotary-type information recording/reproducing apparatus including data recording magnetic disks, magnetic heads for recording data in said magnetic disks or reproducing data from them while the magnetic disks are being rotated, a rotary-type actuator for moving said magnetic heads in a radial direction of the magnetic disk to position the heads, and a base which retains said magnetic disks and said rotary-type actuator thereon, said actuator comprising,
a carriage which supports the magnetic heads at one end thereof and retains a driving coil at the other end thereof,
a pivot assembly for rotatably supporting said carriage, and
a magnet-yoke assembly for generating torque in cooperation with said driving coil to rotate said carriage about said pivot assembly, said magnet-yoke assembly extending planarly from the pivot assembly in an in-plane direction relative to the base,
said apparatus being provided with a cover for surrounding said rotary-type actuator and said magnetic disks,
said pivot assembly and said carriage being incorporated between yokes of said magnet-yoke assembly,
said magnet-yoke assembly, said pivot assembly and said carriage being assembled integrally with one another,
said magnet-yoke assembly being fixedly secured to the base on and/or in the vicinity of an extension line passing through the magnetic head and the pivot assembly and frictionally contacted with the base at positions in the in-plane direction relative to the base,
said magnet-yoke assembly being fixedly secured to the cover on and/or in the vicinity of the extension line passing through the magnetic head and the pivot assembly, and
said cover being provided with second mounts at positions in the in-plane direction relative to the cover, said second mounts being projected toward the magnet-yoke assembly so that they frictionally contact with the magnet-yoke assembly.

8. A rotary-type information recording/reproducing apparatus according to any one of claims 3, 4 and 7, wherein plate-like or ring-like viscous elastic members are provided between said second mounts of said base and/or the cover and the magnet-yoke assembly.

9. A rotary-type information recording/reproducing apparatus according to claim 1 or 7, including at least one first mount projected for fixing the magnet-yoke assembly to the base or the cover by a screw fastener or fasteners at a plurality of positions in the vicinity of the extension line passing through the magnetic head and the pivot assembly when the head is located at a central track region of the magnetic disk, and second mounts projected for frictionally contacting with the magnet-yoke assembly at positions in the in-plane direction relative to the base.

10. A rotary-type information recording/reproducing apparatus including data recording magnetic disks rotatably supported on a base, and a rotary-type actuator for moving magnetic heads in a radial direction of the magnetic disk to position the magnetic heads, said magnetic heads recording data in said magnetic disks or reproducing data from them, said rotary-type actuator comprising,
a carriage which supports the magnetic heads at one end thereof and retains a driving coil at the other end thereof,
a pivot assembly for rotatably supporting said carriage, and
a magnet-yoke assembly for generating torque in cooperation with said driving coil to rotate said carriage about said pivot assembly,
said pivot assembly and carriage being incorporated between yokes of said magnet-yoke assembly,
said magnet-yoke assembly, said pivot assembly and said carriage being assembled integrally with one another, and
said magnet-yoke assembly being fixedly secured to the base at end positions along an extension line passing through the magnetic head and the pivot assembly.

11. A rotary-type information recording/reproducing apparatus including data recording magnetic disks rotatably supported on a base, and a rotary-type actuator for moving magnetic heads in a radial direction of the magnetic disk to position the magnetic heads, said magnetic heads recording data in said magnetic disks or reproducing data from them, said rotary-type actuator comprising,
a carriage which supports the magnetic heads at one end thereof and retains a driving coil at the other end thereof,
a pivot assembly for rotatably supporting said carriage, and
a magnet-yoke assembly for generating torque in cooperation with said driving coil to rotate said carriage about said pivot assembly,
said pivot assembly and carriage being incorporated between yokes of said magnet-yoke assembly,
said magnet-yoke assembly, said pivot assembly and said carriage being assembled integrally with one another, and
the magnetic heads, the pivot assembly and the fixture positions between the magnet-yoke assembly and the base are arrayed substantially in a line.

12. A rotary-type information recording/reproducing apparatus according to claim 8, wherein said base is provided with at least one first mount projected for fixing said magnet-yoke assembly thereto, and the extension line passing through the magnetic head and the pivot assembly extends in a contour of an outer periphery of said first mount.

13. A rotary-type information recording/reproducing apparatus according to claim 9, wherein said base is provided with a plurality of second mounts at positions extending in the in-plane direction relative to the base from the position of said first mount, said second mounts being projected toward the magnet-yoke assembly so that they frictionally contact with the magnet-yoke assembly.

14. A rotary-type information recording/reproducing apparatus including data recording magnetic disks rotatably supported on a base, and a rotary-type actuator for moving magnetic heads in a radial direction of the magnetic disk to position the magnetic heads, said magnetic heads recording data in said magnetic disks or reproducing data from them, said rotary-type actuator comprising,
a carriage which supports the magnetic heads at one end thereof and retains a driving coil at the other end thereof,
a pivot assembly for rotatably supporting said carriage, and
a magnet-yoke assembly for generating torque in cooperation with said driving coil to rotate said carriage about said pivot assembly,
said magnet-yoke assembly including the permanent magnets, and upper and lower yokes between which said pivot assembly and carriage are incorporated,
said magnet-yoke assembly, said pivot assembly and said carriage being assembled integrally with one another, and
said magnet-yoke assembly being fixed to the base displaceably with respect to it in an in-plane direction relative to the base (in a lengthwise direction of the lower yoke).

15. A rotary-type information recording/reproducing apparatus including data recording magnetic disks rotatably supported on a base, and a rotary-type actuator for moving magnetic heads in a radial direction of the magnetic disk to position the magnetic heads, said magnetic heads recording data in said magnetic disks or reproducing data from them, said rotary-type actuator comprising,
a carriage which supports the magnetic heads at one end thereof and retains a driving coil at the other end thereof,
a pivot assembly for rotatably supporting said carriage, and
a magnet-yoke assembly for generating torque in cooperation with said driving coil to rotate said carriage about said pivot assembly,
said magnet-yoke assembly including the permanent magnets, and upper and lower yokes between which said pivot assembly and carriage are incorporated,
said magnet-yoke assembly, said pivot assembly and said carriage being assembled integrally with one another, and
said magnet-yoke assembly being fixed to the base in such a manner that a rotational axis of said carriage is not displaced with respect to the base.
